Europäisches Patentamt

European Patent Office

Office européen des brevets

(11) Publication number: **0 478 180 A2**

# EUROPEAN PATENT APPLICATION

(21) Application number: **91308325.9**

(22) Date of filing: **12.09.91**

(51) Int. Cl.⁵: **H01S 3/10**

(30) Priority: **22.09.90 GB 9020805**

(43) Date of publication of application:
**01.04.92 Bulletin 92/14**

(84) Designated Contracting States:
**DE ES FR IT**

(71) Applicant: **UNITED KINGDOM ATOMIC ENERGY AUTHORITY**
**11 Charles II Street**
**London SW1Y 4QP (GB)**

(72) Inventor: **Osborne, Michael Robert**
**52 Yeadling Avenue**
**Rayners Lane, Harrow, Middlesex (GB)**

(74) Representative: **Wood, Paul Austin et al**
**United Kingdom Atomic Energy Authority**
**Patents Branch B329 Harwell Laboratory**
**Oxfordshire OX11 0RA (GB)**

(54) **Laser resonator.**

(57) A laser including a lasing cavity formed by a mirror and a phase conjugate reflector including a stimulated Brillouin scattering (SBS) cell there being included also means for causing an avalanche increase in the Brillouin scattering within the SBS cell thereby to cause the SBS cell to act in the manner of a Q-switch within the lasing cavity.

EP 0 478 180 A2

The present invention relates to lasers and more particularly to laser resonators.

For a laser to function, it is necessary to ensure that both the initial excitation and the subsequent relaxation of the lasing medium are carried out efficiently. The latter is ensured by placing the lasing medium between two reflectors arranged to reflect emitted laser radiation back into the lasing medium a number of times prior to the final extraction of the laser radiation. The two reflectors are said to form an optical cavity or laser resonator.

In a conventional laser cavity, the positioning, curvature and alignment of the reflectors is critical to the performance of the laser. The presence of any optical aberrations or distortions within the cavity will disturb the delicate optical configuration and result in degraded laser output. However, resonators incorporating reflectors which exhibit the property known as phase conjugation are insensitive to optical aberrations and changes in aberrations such as may be caused by thermal lensing in solid state lasers, or discharge inhomogeneity in gas lasers.

The present invention uses a phase conjugate reflector which operates through the mechanism of stimulated Brillouin scattering (SBS), a phenomenon which can occur in non-linear optical media.

In order to initiate the SBS process it is necessary for the integral $\int_o^l gI \, dl$ to exceed a value of approximately 30, where g is the Brillouin gain coefficient (a property of the non-linear medium), I is the intensity of the incident radiation (which may vary in time and space) and the integration is carried out over the interaction length, 1.

Phase conjugate reflectors employing SBS have been used previously (eg Appl. Phy. B48,351-357(1989)) but invariably require the injection of some narrow-bandwidth seed beam to initiate the SBS process. Previous techniques also have required the use of Q-switching when applied to solid state lasers.

The present invention avoids the need for the injection of energy from from external sources or line narrowing and also the need for active Q-switching. It is particularly suitable for use with solid lasing media.

According to the present invention there is provided a laser including a lasing medium, means for stimulating the lasing medium to lasing action and a laser resonator consisting of a mirror and a phase conjugate reflector, the phase conjugate reflector consisting of a transparent SBS cell containing a medium capable of exhibiting stimulated Brillouin scattering and a lens positioned to focus laser radiation emitted by the lasing medium into the SBS cell, wherein there is included means for causing the integral $\int_o^l gI \, dl$ as hereinbefore defined to exceed a threshold value such that an avalanche increase of stimulated Brillouin scattering within the SBS cell can occur.

One method for causing the previously mentioned integral to be satisfied is to increase the intensity, I, of the laser radiation within the SBS cell to a value sufficient to initiate SBS using a plano-convex lens positioned with its planar surface towards the lasing medium and oriented so as to provide a sub-cavity in which an initial amount of lasing action takes place the output from which is focused into the SBS cell by the plano-convex lens. The plano-convex lens may replace the lens which forms part of the phase conjugate reflector. Other aligned, plane surfaces may be used in the same way.

As an alternative to increasing the lasing intensity to a value sufficient to initiate SBS, it is possible to increase the interaction length (1) within the non-linear medium such that the threshold condition $\int_o^l gI \, dl \geq 30$ is attained. One way of achieving this is to employ a combination of focussing lens, non-linear medium and laser excitation power sufficient to produce optical trapping within the non-linear medium. The resulting increased interaction length (1) can be made to be sufficient for the SBS process to be initiated.

A third possible mode of initiation is to reduce the effective SBS threshold is by seeding the SBS interaction region with radiation of the relevant Brillouin shifted frequency. This reduces the threshold integral below the value of 30. When using a broad bandwidth laser source, it is possible to produce a Brillouin shift smaller than the laser bandwidth. Under these conditions, back seeding with the broadband emission will inject some radiation having the desired freqency into the SBS cell and so initiate the SBS process. The requirements for the backseeding radiation are, with the exception of its critical frequency, very modest and in practice it may be provided by even a diffuse reflector.

The invention will now be described by reference to example:

Figure 1 a diagrammatic representation of a laser embodying the invention;

Figure 2 illustrates another embodiment of the invention; and

Figures 3a to 3c illustrate other embodiments of the invention in which reflectors are used to enhance the energy density of laser radiation within a SBS cell forming part of a laser embodying the invention.

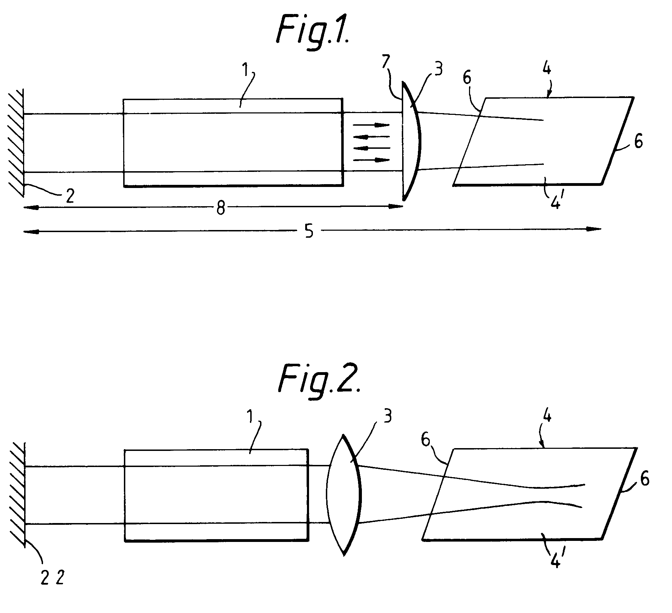

Referring to Figure 1, a laser embodying the invention consists of a body of lasing medium 1, which may be solid or gaseous, a conventional reflector 2 such as is used in the art to form a laser resonator, a plano-convex lens 3 and a transparent SBS cell 4 containing a medium such as n-hexane which exhibits the acousto-optical effect known as stimulated Brillouin scattering. The lens 3 and the SBS cell 4 constitute a phase conjugate reflector and together with the reflector 1 form a phase conjugate main laser resonator, or cavity 5. The SBS cell 4 has planar ends 6 and 6 which are inclined at an angle to the optical axis of the laser cavity.

The lens 3 is positioned with its planar surface 7 towards the body of lasing medium 1 and forms a low Q sub-cavity 8 within the main laser cavity 5, the output from which is focused into the SBS cell 4 by the lens 3.

In use, when the lasing medium 1 is excited to lasing action by whatever conventional means is appropriate to its nature, sufficient output laser radiation is produced by the sub-cavity to induce an avalanche increase in the amount of stimulated Brillouin scattering within the SBS cell 4, which causes its efficiency as a reflector to increase rapidly, thus increasing the Q of the main laser cavity 5 and initiating full lasing action in the lasing medium 1 in the manner of conventional active or passive Q-switching.

Figure 2 shows an arrangement which employs self-trapping within the SBS medium in the SBS cell 4 to increase the effective interaction length 1 to cause the integral $\int_{o}^{l} g I\, dl$ to exceed the critical value 30. Those components which are analogous to those describsed in relation to the embodiment of Figure 1 have the same reference numerals. In this arrangement, the initial pulse of low intensity laser radiation from the lasing medium 1 is brought to a focus within the SBS cell 4 by means of the lens 3. The lasing intensity, SBS medium in the SBS all 4 and focal length of the lens 3 are chosen so as to produce self trapping within the SBS medium. This effect is well known, and occurs when the non-linear refractive index of a medium acts to produce a positive lens within the medium of sufficient power to exactly compensate for the effects of diffraction, resulting in a beam which propagates with a constant, small diameter (see Marburger, Prog. Quant. Electron., 4, 35 (1975)). The resulting region of high intensity is, therefore considerably longer than that produced without self focusing (see Figure 2), thereby increasing 1 in the threshold integral to a value high enough for SBS initiation to occur.

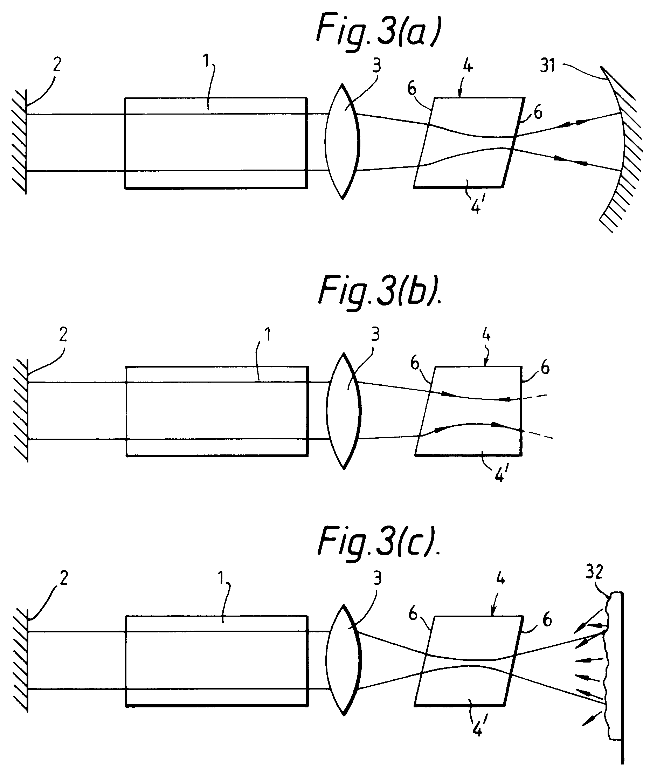

The threshold integral $\int_{o}^{l} g I\, dl = 30$ applies when SBS originates from thermal (noise) scattering, in which case a Stokes gain of $\sim 10^{13}$ is required before any observable backscatter is produced. If, however, the interaction region is initially seeded with some radiation at the Stokes frequency, the Stokes gain required is greatly reduced, with the effect of reducing the figure on the RHS of the integral. Figure 3 shows three ways in which backseeding can be employed so that the threshold condition is satisfied and an avalanche increase in the stimulated Brillouin scattering within the SBS cell 4 occurs. Again, in each sub-figure within Figure 3 those components which are common to the other embodiment have the same reference numerals. Figure 3(a) shows an arrangement in which the lens 3 is a bi-convex lens and a partially-reflecting concave mirror 31 is placed on the output side of the SBS cell 4. When the lasing medium 1 is excited initially the resulting low-intensity pulse of laser radiation is concentrated within the SBS cell 4 by the lens 3 before passing out of the SBS cell 4. Some of the radiation which has passed through the SBS cell 4 is collected by the mirror 31 and reflected back towards the SBS cell 4.

In the arrangement shown in Figure 3(b) the mirror 21 is omitted and the output face 6 of the SBS cell 4 is arranged to be approximately normal to the optic axis of the laser cavity 5 and to act as a partially reflecting mirror, with the same results as in the arrangement shown in Figure 3(a).

Figure 3(c) shows another arrangement in which a diffuse reflector 32 is used instead of the concave mirror 31. Its action is the same, however.

Advantages possessed by the above described self-initiating phase conjugate laser resonators over conventional laser resonators include a lack of sensitivity to static and dynamic optical aberrations. Hence they are stable over a wide range of input power loadings and give a wide operating range in terms of pulse energy and repetition rate. Also, they provide high peak power outputs with a potential for low divergence output beams.

## Claims

1. A laser including a lasing medium, means for stimulating the lasing medium to lasing action and a laser resonator consisting of a mirror and a phase conjugate reflector, the phase conjugate reflector consisting of a transparent SBS cell containing a non-linear optical medium capable of exhibiting stimulated Brillouin scattering and a lens positioned to focus laser radiation emitted by the lasing medium into the SBS cell, wherein there is included means (3) for causing the integral $\int_{o}^{l} g I\, dl$ as hereinbefore defined to exceed a threshold value such that an avalanche increase in stimulated Brillouin scattering within the SBS cell (4) can occur.

2. A laser according to claim 1 wherein the means for causing the said integral to exceed the threshold value for an avalanche increase in stimulated Brillouin scattering in the non-linear optical medium (4') to occur comprises a plano-convex lens (3) positioned with its planar surface toward the lasing medium (1) and so oriented as to provide a sub-cavity in which an initial amount of lasing activity can take place the output from which is focussed into the SBS cell (4) by the plano-convex lens (3).

3. A laser according to claim 2 wherein the plano-convex lens (3) is the lens comprising part of the phase conjugate reflector (3, 4).

4. A laser according to claim 1 wherein the combination of the focussing lens (3), the non-linear optical medium (4') and the laser excitation power are such as to produce optical trapping in the non-linear optical medium (4') thereby to cause the said integral to exceed the threshold value for an avalanche increase in stimulated Brillouin scattering to occur in the non-linear optical medium (4').

5. A laser according to claim 1 wherein the means for causing the said integral to exceed the threshold value for an avalanche increase in stimulated Brillouin to occur in the non-linear optical medium (4') comprises means (31) for injecting into the SBS cell (4) radiation having the same frequency as that produced by the Brillouin scattering of the laser radiation entering the SBS cell (4).

6. A laser according to any proceding claim wherein the non-linear optical medium (4') included in the SBS cell (4) is n-hexane.

## Fig.1.

## Fig.2.

# Fig.3(a)

# Fig.3(b).

# Fig.3(c).